# EUROPEAN PATENT APPLICATION

(11) **EP 3 279 777 A1**
(43) Date of publication of application: **07.02.2018**
(21) Application number: 17179601.4
(22) Date of filing: 04.07.2017
(51) Int. Cl.: G06F 3/041, G06F 3/044

(54) **TOUCH SENSOR AND DISPLAY DEVICE INCLUDING THE SAME**

(30) Priority: 07.07.2016 KR 20160085928
(71) Applicant: Samsung Display Co., Ltd, Gyeonggi-do 17113 (KR)
(72) Inventor: KU, Ja Seung, Gyeonggi-do (KR); KIM, Yun Ho, Gyeonggi-do (KR); JANG, Hyoung Wook, Gyeonggi-do (KR); KIM, Kwan Ho, Gyeonggi-do (KR)
(74) Representative: Walaski, Jan Filip

(57) **Abstract**

A touch sensor (10) includes driving electrodes (Txi to Txj), sensing electrodes (Rxi to Rxk), a memory (102), and a driver (101). The sensing electrodes are insulated from the driving electrodes. The memory includes signal width information (Iw1 to Iwj). The driver is configured to: determine signal widths to generate driving signals based on the signal width information; and supply the driving signals to the driving electrodes.

## Description

The present invention relates to a touch sensor and a display device including the same.

With an increase in interest for information displays has come an increase in demand for portable information media, as well as research on and commercialization of display devices. Some display devices may include a touch sensor for detecting a touch input of a user together with an image display function. Accordingly, a user is capable of more conveniently using the display device through the touch sensor. Various types of touch sensors exist, but among them, a capacitive touch sensor capable of detecting a point at which capacitance is changed according to a contact (or near contact) of a human appendage or an object and recognizing a touch position, may easily detect a multi-touch event. It is also noted that capacitive touch sensors exhibit relatively better accuracy than other forms of touch sensors, and, as such, are widely used in electronic devices, such as display devices.

One or more exemplary embodiments provide a touch sensor configured to minimize (or at least reduce) an error in recognizing a touch.

One or more exemplary embodiments provide a display device including a touch sensor configured to minimize (or at least reduce) an error in recognizing a touch.

Additional aspects will be set forth in the detailed description which follows, and, in part, will be apparent from the disclosure, or may be learned by practice of the inventive concept.

According to one or more exemplary embodiments, a touch sensor includes driving electrodes, sensing electrodes, a memory, and a driver. The sensing electrodes are insulated from the driving electrodes. The memory includes signal width information. The driver is configured to: determine signal widths to generate driving signals based on the signal width information; and supply the driving signals to the driving electrodes.

According to one or more exemplary embodiments, a display device includes a display panel and a touch sensor on the display panel. The touch sensor includes driving electrodes, sensing electrodes, a memory, and a first driver. The sensing electrodes are insulated from and cross the driving electrodes. The memory includes signal width information. The first driver is configured to: determine signal widths to generate driving signals based on the signal width information; and supply the driving signals to the driving electrodes.

The foregoing general description and the following detailed description are exemplary and explanatory and are intended to provide further explanation of the claimed subject matter.

The accompanying drawings, which are included to provide a further understanding of the inventive concept, and are incorporated in and constitute a part of this specification, illustrate exemplary embodiments of the inventive concept, and, together with the description, serve to explain principles of the inventive concept.
FIG. 1 is a block diagram illustrating a touch sensor, according to one or more exemplary embodiments.
FIG. 2 is a block diagram illustrating a touch controller, according to one or more exemplary embodiments.
FIG. 3 is a diagram illustrating signal width information stored in a memory, according to one or more exemplary embodiments.
FIG. 4 is a diagram illustrating driving signals, according to one or more exemplary embodiments.
FIG. 5 is a diagram illustrating driving signals, according to one or more exemplary embodiments.
FIG. 6 is a diagram illustrating driving signals applied to driving electrode groups, according to one or more exemplary embodiments.
FIG. 7 is a block diagram illustrating a touch sensor, according to one or more exemplary embodiments.
FIG. 8 is a diagram illustrating driving signals, according to one or more exemplary embodiments.
FIG. 9 is a block diagram illustrating a display device, according to one or more exemplary embodiments.
FIG. 10 is a cross-sectional diagram illustrating a sensor unit and a display panel, according to one or more exemplary embodiments.
FIG. 11 is a block diagram illustrating a display driver and pixels of a display panel, according to one or more exemplary embodiments.
FIGS. 12A and 12B are diagrams of illustrative pixels of FIG. 11, according to various exemplary embodiments.
FIG. 13 is a cross-sectional view illustrating a portion of a display panel, according to one or more exemplary embodiments.
FIG. 14 is a diagram illustrating a sensor unit, according to one or more exemplary embodiments.
FIGS. 15A, 15B, and 15C are diagrams illustrating various driving signals, according to various exemplary embodiments.
FIG. 16 is a diagram illustrating detecting cells, according to one or more exemplary embodiments.

In the following description, for the purposes of explanation, numerous specific details are set forth in order to provide a thorough understanding of various exemplary embodiments. It is apparent, however, that various exemplary embodiments may be practiced without these specific details or with one or more equivalent arrangements. In other instances, well-known structures and devices are shown in block diagram form in order to avoid unnecessarily obscuring various exemplary embodiments.

Unless otherwise specified, the illustrated exemplary embodiments are to be understood as providing exemplary features of varying detail of various exemplary embodiments. Therefore, unless otherwise specified, the features, components, modules, layers, films, panels, regions, and/or aspects of the various illustrations may be otherwise combined, separated, interchanged, and/or rearranged without departing from the disclosed exemplary embodiments. Further, in the accompanying figures, the size and relative sizes of layers, films, panels, regions, etc., may be exaggerated for clarity and descriptive purposes. When an exemplary embodiment may be implemented differently, a specific process order may be performed differently from the described order. For example, two consecutively described processes may be performed substantially at the same time or performed in an order opposite to the described order. Also, like reference numerals denote like elements.

When an element or layer is referred to as being "on," "connected to," or "coupled to" another element or layer, it may be directly on, connected to, or coupled to the other element or layer or intervening elements or layers may be present. When, however, an element or layer is referred to as being "directly on," "directly connected to," or "directly coupled to" another element or layer, there are no intervening elements or layers present. Further, the x-axis, the y-axis, and the z-axis are not limited to three axes of a rectangular coordinate system, and may be interpreted in a broader sense. For example, the x-axis, the y-axis, and the z-axis may be perpendicular to one another, or may represent different directions that are not perpendicular to one another. For the purposes of this disclosure, "at least one of X, Y, and Z" and "at least one selected from the group consisting of X, Y, and Z" may be construed as X only, Y only, Z only, or any combination of two or more of X, Y, and Z, such as, for instance, XYZ, XYY, YZ, and ZZ. As used herein, the term "and/or" includes any and all combinations of one or more of the associated listed items.

Although the terms "first," "second," etc. may be used herein to describe various elements, components, regions, layers, and/or sections, these elements, components, regions, layers, and/or sections should not be limited by these terms. These terms are used to distinguish one element, component, region, layer, and/or section from another element, component, region, layer, and/or section. Thus, a first element, component, region, layer, and/or section discussed below could be termed a second element, component, region, layer, and/or section without departing from the teachings of the present disclosure.

Spatially relative terms, such as "beneath," "below," "lower," "above," "upper," and the like, may be used herein for descriptive purposes, and, thereby, to describe one element or feature's relationship to another element(s) or feature(s) as illustrated in the drawings. Spatially relative terms are intended to encompass different orientations of an apparatus in use, operation, and/or manufacture in addition to the orientation depicted in the drawings. For example, if the apparatus in the drawings is turned over, elements described as "below" or "beneath" other elements or features would then be oriented "above" the other elements or features. Thus, the exemplary term "below" can encompass both an orientation of above and below. Furthermore, the apparatus may be otherwise oriented (e.g., rotated 90 degrees or at other orientations), and, as such, the spatially relative descriptors used herein interpreted accordingly.

The terminology used herein is for the purpose of describing particular embodiments and is not intended to be limiting. As used herein, the singular forms, "a," "an," and "the" are intended to include the plural forms as well, unless the context clearly indicates otherwise. Moreover, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof.

Various exemplary embodiments are described herein with reference to sectional illustrations that are schematic illustrations of idealized exemplary embodiments and/or intermediate structures. As such, variations from the shapes of the illustrations as a result, for example, of manufacturing techniques and/or tolerances, are to be expected. Thus, exemplary embodiments disclosed herein should not be construed as limited to the particular illustrated shapes of regions, but are to include deviations in shapes that result from, for instance, manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the drawings are schematic in nature and their shapes are not intended to illustrate the actual shape of a region of a device and are not intended to be limiting.

Unless otherwise defined, all terms (including technical and scientific terms) used herein have the same meaning as commonly understood by one of ordinary skill in the art to which this disclosure is a part. Terms, such as those defined in commonly used dictionaries, should be interpreted as having a meaning that is consistent with their meaning in the context of the relevant art and will not be interpreted in an idealized or overly formal sense, unless expressly so defined herein.

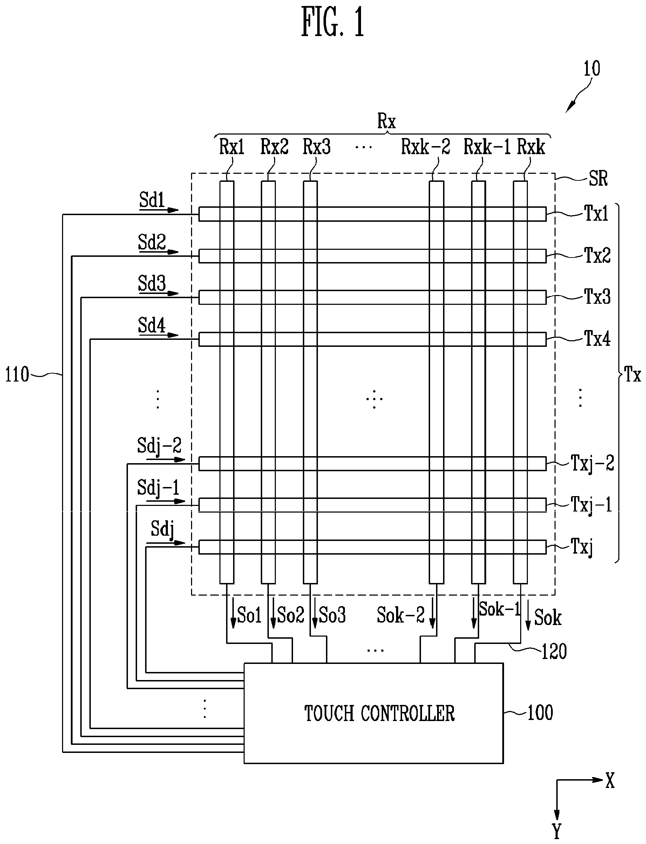

FIG. 1 is a block diagram illustrating a touch sensor, according to one or more exemplary embodiments.

Referring to FIG. 1, a touch sensor 10 may include a plurality of driving electrodes Tx, a plurality of sensing electrodes Rx, and a touch controller 100. Although specific reference will be made to this particular implementation, it is also contemplated that touch sensor 10 may embody many forms and include multiple and/or alternative components.

According to one or more exemplary embodiments, the driving electrodes Tx and the sensing electrodes Rx may be disposed in a touch sensing area SR. The touch sensing area SR is defined as an area in which a touch input by a user is detectable. In this manner, the touch sensing area SR may also refer to an active area of the touch sensor 10.

The driving electrodes Tx may be elongated in a first direction (for example, an X-axis direction) and the plurality of driving electrodes Tx may be arranged (e.g., spaced apart from one another) in a second direction (for example, a Y-axis direction) crossing the first direction. For example, the driving electrodes Tx may include a first driving electrode Tx1 to a j^{th} driving electrode Txj. That is, FIG. 1 illustrates the driving electrodes Tx including "j" driving electrodes Tx1 to Txj, "j" being a positive integer greater than zero.

The sensing electrodes Rx are insulated from and cross the driving electrodes Tx, and, thereby, operate in conjunction with the driving electrodes Tx to provide a capacitive touch sensor. In this manner, the sensing electrodes Rx may be elongated in the second direction (for example, the Y-axis direction) and the plurality of sensing electrodes Rx may be arranged in the first direction (for example, the X-axis direction). For example, the sensing electrodes Rx may include a first sensing electrode Rx1 to a k^{th} sensing electrode Rxk. That is, FIG. 1 illustrates the sensing electrodes Rx including "k" sensing electrodes Rx1 to Rx, "k" being a positive integer greater than zero.

Mutual capacitance exists between the driving electrodes Tx1 to Txj and the sensing electrodes Rx1 to Rxk based on the disposition of the driving electrodes Tx1 to Txj and the sensing electrodes Rx1 to Rxk. As such, when a touch (or near touch) is input to (or on) the touch sensor 10, the mutual capacitance is changed in relation to the touch. For descriptive convenience, detection of touches and near touches will be, hereinafter, collectively referred to as "touches," unless the context of the disclosure dictates otherwise.

The driving electrodes Tx1 to Txj and the sensing electrodes Rx1 to Rxk may include a conductive material. For example, the conductive material may be a metal layer including aluminum (Al). It is contemplated, however, that the metal layer may include at least one of gold (Au), silver (Ag), aluminum (Al), molybdenum (Mo), chrome (Cr), titanium (Ti), nickel (Ni), neodymium (Nd), copper (Cu), platinum (Pt), and the like. Further, the driving electrodes Tx1 to Txj and the sensing electrodes Rx1 to Rxk may be formed of a transparent conductive material. For instance, the transparent conductive material may include silver nano wire (AgNW), indium tin oxide (ITO), indium zinc oxide (IZO), antimony zinc oxide (AZO), indium tin zinc oxide (ITZO), zinc oxide (ZnO), tin oxide (SnO₂), carbon nano tube, graphene, and the like. Each of the driving electrodes Tx1 to Txj and the sensing electrodes Rx1 to Rxk may be formed as a single layer structure or a multi-layer structure. When formed as multi-layer structures, various ones of the aforementioned conductive and/or transparent conductive materials may be utilized in association with exemplary embodiments. To this end, the driving electrodes Tx1 to Txj and the sensing electrodes Rx1 to Rxk may be formed of the same material (or materials) or different materials.

According to one or more exemplary embodiments, the driving electrodes Tx1 to Txj and the sensing electrodes Rx1 to Rxk may be positioned on different layers. It is contemplated, however, that the driving electrodes Tx1 to Txj and the sensing electrodes Rx1 to Rxk may also be positioned on the same layer. However, to prevent an electrical connection of the driving electrodes Tx1 to Txj and the sensing electrodes Rx1 to Rxk, an insulating layer may be partially positioned in crossing portions of the driving electrodes Tx1 to Txj and the sensing electrodes Rx1 to Rxk to insulate the driving electrodes Tx1 to Txj and the sensing electrodes Rx1 to Rxk from one another.

As seen in FIG. 1, the driving electrodes Tx1 to Txj and the sensing electrodes Rx1 to Rxk are shown having bar (e.g., rectangular) shapes, but the shape and/or configuration of the driving electrodes Tx1 to Txj and the sensing electrodes Rx1 to Rxk may be variously changed. For instance, the driving electrodes Tx1 to Txj and the sensing electrodes Rx1 to Rxk may include a mesh configuration, a diamond-shaped configuration, etc.

The touch controller 100 may detect a touch position using the driving electrodes Tx1 to Txj and the sensing electrodes Rx1 to Rxk. To this end, the touch controller 100 may supply driving signals Sd1 to Sdj to the driving electrodes Tx1 to Txj for driving the touch sensor 10. For example, the touch controller 100 may sequentially supply the driving signals Sd1 to Sdj to the driving electrodes Tx1 to Txj, or may simultaneously supply the driving signals Sd1 to Sdj to at least two of the driving electrodes Tx1 to Txj. In this manner, first connection (or transmission) lines 100 may be connected between the driving electrodes Tx1 to Txj and the touch controller 100 to transmit the driving signals Sd1 to Sdj to the driving electrodes Tx1 to Txj. The first connection lines 110 may be formed of the same material(s) and/or structure as that of the driving electrodes Tx1 to Txj.

The touch controller 100 may detect a touch position using output signals So1 to Sok of the sensing electrodes Rx1 to Rxk. For example, the touch controller 100 may detect a variance in capacitance based on a touch using the output signals So1 to Sok. As such, the touch controller 100 may recognize (or otherwise detect) a position of the touch. To this end, second connection lines 120 may be connected between the sensing electrodes Rx1 to Rxk and the touch controller 100 to transmit the output signals SO1 to Sok to the touch controller 100. The second connection lines 120 may be formed of the same material(s) and/or structure as that of the sensing electrodes Rx1 to Rxk.

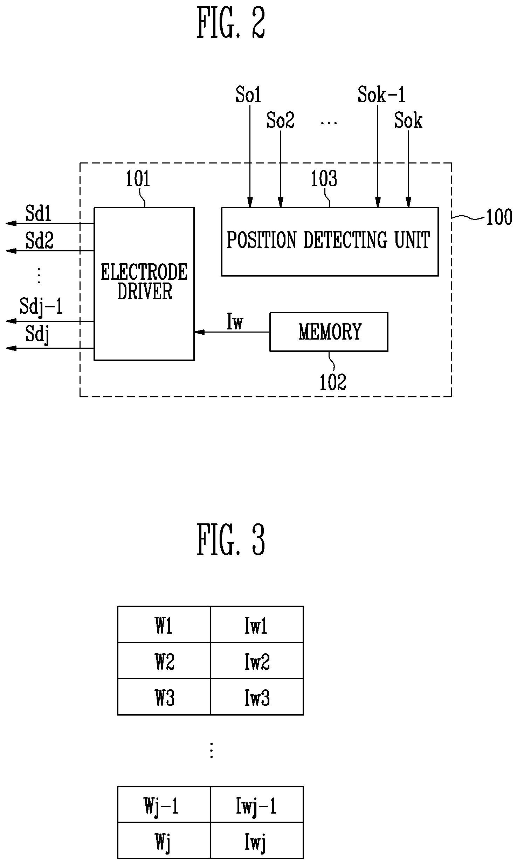

FIG. 2 is a block diagram illustrating the touch controller of FIG. 1, according to one or more exemplary embodiments. FIG. 3 is a diagram illustrating signal width information stored in a memory, according to one or more exemplary embodiments.

Referring to FIG. 2, the touch controller 100 may include an electrode driver 101, a memory 102, and a position detecting unit (or position detector) 103. Although specific reference will be made to this particular implementation, it is also contemplated that touch controller 100 may embody many forms and include multiple and/or alternative components.

The electrode driver 101 may supply the driving signals Sd1 to Sdj to the driving electrodes Tx1 to Txj through the first connection lines 110. In this manner, the electrode driver 101 may determine widths of the driving signals Sd1 to Sdj with reference to signal width information Iw stored in the memory 102. To this end, as illustrated in FIG. 3, the memory 102 may include a plurality of elements of signal width information Iw1 to Iwj, and the plurality of elements of signal width information Iw1 to Iwj may correspond to different signal widths W1 to Wj, respectively. For example, the first signal width information Iw1 may correspond to a first signal width W1, the second signal width information Iw2 may correspond to a second signal width W2, and the j^{th} signal width information Iwj may correspond to a j^{th} signal width Wj. It is noted that the first signal width W1 and the second signal width W2 to the j^{th} signal width Wj may have different values. Each of the signal width information Iw1 to Iwj may include data that respectively corresponds to the signal widths W1 to Wj. For example, the signal widths W1 to Wj may be set to be decreased from the first signal width W1 to the j^{th} signal width Wj.

The position detecting unit 103 may receive the output signals So1 to Sok from the sensing electrodes Rx1 to Rxk through the second connection lines 120 and may recognize a variance in capacitance of the touch sensing area SR using the output signals So1 to Sok. In this manner, the position detecting unit 103 may detect a position of a touch input to the touch sensing area SR based on the variance in capacitance.

In one or more exemplary embodiments, the touch controller 100, electrode driver 101, position detecting unit 103, and/or one or more components thereof, may be implemented via one or more general purpose and/or special purpose components, such as one or more discrete circuits, digital signal processing chips, integrated circuits, application specific integrated circuits, microprocessors, processors, programmable arrays, field programmable arrays, instruction set processors, and/or the like.

According to one or more exemplary embodiments, the features, functions, processes, etc., described herein may be implemented via software, hardware (e.g., general processor, digital signal processing (DSP) chip, an application specific integrated circuit (ASIC), field programmable gate arrays (FPGAs), etc.), firmware, or a combination thereof. In this manner, the touch controller 100, electrode driver 101, position detecting unit 103, and/or one or more components thereof may include or otherwise be associated with one or more memories, such as memory 102, including code (e.g., instructions) configured to cause the touch controller 100, electrode driver 101, position detecting unit 103, and/or one or more components thereof to perform one or more of the features, functions, processes, etc., described herein.

The memories (such as memory 102) may be any medium that participates in providing code to the one or more software, hardware, and/or firmware components for execution. Such memories may be implemented in any suitable form, including, but not limited to, non-volatile media, volatile media, and transmission media. Non-volatile media include, for example, optical or magnetic disks. Volatile media include dynamic memory. Transmission media include coaxial cables, copper wire and fiber optics. Transmission media can also take the form of acoustic, optical, or electromagnetic waves. Common forms of computer-readable media include, for example, a floppy disk, a flexible disk, hard disk, magnetic tape, any other magnetic medium, a compact disk-read only memory (CD-ROM), a rewriteable compact disk (CD-RW), a digital video disk (DVD), a rewriteable DVD (DVD-RW), any other optical medium, punch cards, paper tape, optical mark sheets, any other physical medium with patterns of holes or other optically recognizable indicia, a random-access memory (RAM), a programmable read only memory (PROM), and erasable programmable read only memory (EPROM), a FLASH-EPROM, any other memory chip or cartridge, a carrier wave, or any other medium from which information may be read by, for example, a controller/processor.

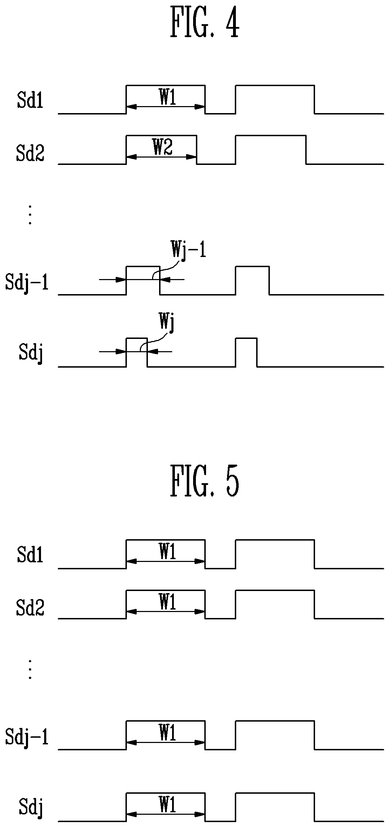

FIG. 4 is a diagram illustrating driving signals, according to one or more exemplary embodiments.

With continued reference to FIG. 1, the touch controller 100 may be disposed at one side of the touch sensing area SR. For example, the touch controller 100 may be disposed at an upper side or a lower side of the touch sensing area SR; however, any suitable disposition for the touch controller 100 may be utilized in association with exemplary embodiments. For instance, the touch controller 100 may be positioned and spaced apart from distal ends of the sensing electrodes Rx1 to Rxk in the second direction (for example, the Y-axis direction). As seen in FIG. 1, the touch controller 100 is positioned at the lower side of the touch sensing area SR. When the touch controller 100 is disposed as illustrated in FIG. 1, the first connection lines 110 may have different loads or parameters (e.g., resistance, capacitance, inductance, conductance, etc.) according to their differences in length and the like, and, as such, RC delays of the driving signals Sd1 to Sdj may be different from one another.

Accordingly, the RC delays of the driving signals Sd1 to Sdj are generated in proportion to the distances between the driving electrodes Tx1 to Txj and the touch controller 100. For example, the first driving electrode Tx1 is positioned farthest from the touch controller 100 and the j^{th} driving electrode Txj is positioned closest to the touch controller 100. In this manner, the RC delay is generated largest in the first driving signal Sd1 supplied to the first driving electrode Tx1 and the RC delay is generated smallest in the j^{th} driving signal Sdj supplied to the j^{th} driving electrode Txj. The differences in RC delays between the driving signals SD1 to Sdj causes an error in the recognition of a touch. To compensate for the error, the touch controller 100 may, according to one or more exemplary embodiments, generate and supply the driving signals SD1 to Sdj having different signal widths W1 to Wj depending on the positions of the driving electrodes Tx1 to Txj.

For example, referring to FIG. 4, the electrode driver 101 may control each of the signal widths W1 to Wj of the driving signals Sd1 to Sdj with reference to the signal width information Iw1 to Iwj stored in the memory 102. For example, the electrode driver 101 may set a width of the first driving signal Sd1 to the first signal width W1 with reference to the first signal width information Iw1, and a width of the second driving signal Sd2 to the second signal width W2 with reference to the second signal width information Iw2. Similarly, the electrode driver 101 may set a width of the j^{th} driving signal Sdj to the j^{th} signal width Wj. It is noted that the plurality of elements of signal width information Iw1 to Iwj, which correspond to the driving signals Sd1 to Sdj, respectively, may be stored in the memory 102. It is contemplated, however, that the signal width information Iw1 to Iwj is not limited thereto, and the number of signal width information Iw1 to Iwj may be smaller than the number of driving signals Sd1 to Sdj. In this manner, the electrode driver 101 may determine signal widths of a part of the driving signals with reference to the signal width information Iw1 to Iwj, and may determine signal widths of the remaining driving signals through an interpolation process.

According to one or more exemplary embodiments, the electrode driver 101 may control the signal widths W1 to Wj of the driving signals Sd1 to Sdj in accordance with the positions of the driving electrodes Tx1 to Txj, respectively. In this manner, the driving electrodes Tx1 to Txj may receive the driving signals Sd1 to Sdj having the different signal widths W1 to Wj according to the positions of the driving electrodes Tx1 to Txj. For example, when the driving electrodes Tx1 to Txj are farther from the touch controller 100 or the electrode driver 101, the driving electrodes Tx1 to Txj may receive the driving signals Sd1 to Sdj having a larger signal width. That is, the first driving electrode Tx1 is positioned farther from the touch controller 100 than the second driving electrode Tx2, and, as such, the signal width W1 of the first driving signal Sd1 supplied to the first driving electrode Tx1 may be set larger than the signal width W2 of the second driving signal Sd2 supplied to the second driving electrode Tx2. Further, the j-1^{th} driving electrode Txj-1 is positioned farther from the touch controller 100 than the j^{th} driving electrode Txj, and, as such, the signal width Wj-1 of the j-1^{th} driving signal Sdj-1 supplied to the j-1^{th} driving electrode Txj-1 may be set larger than the signal width Wj of the j^{th} driving signal Sdj supplied to the j^{th} driving electrode Txj. To this end, the signal widths W1 to Wj of the driving signals Sd1 to Sdj may be gradually increased from the j^{th} driving signal Sdj to the first driving signal Sd1.

FIG. 5 is a diagram illustrating driving signals, according to one or more exemplary embodiments.

Referring to FIG. 5, the electrode driver 101 may supply driving signals SD1 to Sdj having a signal width corresponding to any one of signal width information Iw1 to Iwj to the driving electrodes Tx1 to Txj. In this manner, all of the driving electrodes Tx1 to Txj may receive the driving signals SD1 to Sdj having the same signal width. In association with FIG. 4, a difference in the RC delays of the driving signals Sd1 to Sdj was compensated by supplying the driving signals Sd1 to Sdj having the different signal widths W1 to Wj according to the positions of the driving electrodes Tx1 to Txj. In FIG. 5, a difference in RC delay of the driving signals Sd1 to Sdj may also be compensated by setting the widths of the driving signals Sd1 to Sdj to have larger signal widths than a previous case.

For example, the electrode driver 101 may set the signal widths of the remaining driving signals Sd2 to Sdj to be the same as the first driving signal Sd1 having the largest signal width W1. Accordingly, all of the driving signals Sd1 to Sdj may have the same first signal width W1. That is, the electrode driver 101 may set the signal widths of the driving signals Sd1 to Sdj with the signal width W1 having the largest size among the signal widths W1 to Wj corresponding to the signal width information Iw1 to Iwj.

According to one or more exemplary embodiments, the electrode driver 101 may control the driving signals Sd1 to Sdj to have a larger signal width than the smallest signal width Wj. For example, each of the driving signals Sd1 to Sdj may be set to have a signal width of any one of the first to j-1^{th} signal widths W1 to Wj-1.

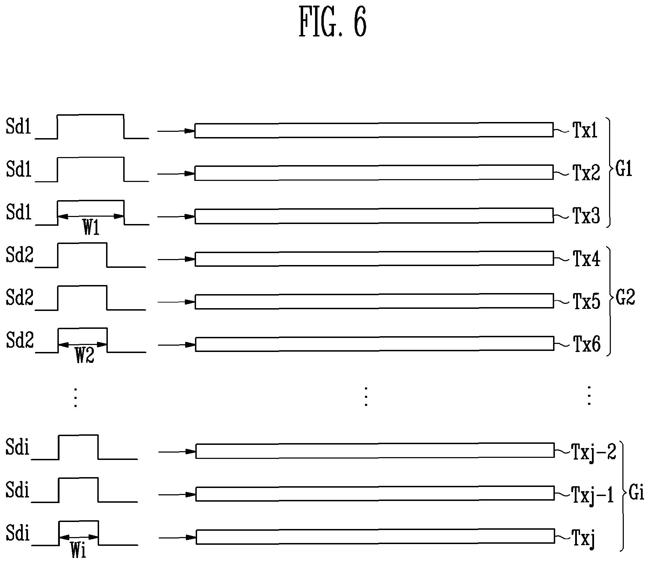

FIG. 6 is a diagram illustrating driving signals applied to driving electrode groups, according to one or more exemplary embodiments.

Referring to FIG. 6, the driving electrodes Tx1 to Txj may be divided into a plurality of driving electrode groups G1 to Gi. In this manner, each of the driving electrode groups G1 to Gi may include a plurality of driving electrodes. For example, FIG. 6 illustrates each of the driving electrode groups G1 to Gi ("i" being an integer greater than zero) including three driving electrodes. It is contemplated, however, that the number of driving electrodes in each of the driving electrode groups G1 to Gi may be variously changed. To this end, the number of driving electrodes included in each of the driving electrode groups G1 to Gi may be different from or the same as one another. In this manner, the touch controller 100 may supply the driving signals Sd1 to Sdj having the different signal widths W1 to Wi to each of the driving electrode groups G1 to Gi. Accordingly, the driving electrode groups G1 to Gi may receive the driving signals Sd1 to Sdj having the different signal widths W1 to Wi.

According to one or more exemplary embodiments, the driving electrodes included in the same driving electrode group may receive the driving signal having the same width. For example, the first driving electrode group G1 including the first driving electrode Tx1, the second driving electrode Tx2, and the third driving electrode Tx3 may receive the first driving signal Sd1 having the first signal width W1, and the second driving electrode group G2 including the fourth driving electrode Tx4, the fifth driving electrode Tx5, and the sixth driving electrode Tx6 may receive the second driving signal Sd2 having the second signal width W2. In this manner, the first driving electrode group G1 is positioned farther from the touch controller 100 than the second driving electrode group G2, and, as such, the first signal width W1 may be larger than the second signal width W2. Further, the i^{th} driving electrode group Gi including the j-2^{th} driving electrode Txj-2, the j-1^{th} driving electrode Txj-1, and the j^{th} driving electrode Txj is positioned closest to the touch controller 100, and, as such, the i^{th} driving electrode group Gi may receive the i^{th} driving signal Sdi having the smallest signal width Wi.

The driving signals Sd1 to Sdi may have different signal widths W1 to Wi in accordance with the respective positions of the driving electrode groups G1 to Gi. For example, when the driving electrode groups G1 to Gi are farther from the touch controller 100, the driving electrode groups G1 to Gi may receive the driving signals Sd1 to Sdj having a larger signal width. To this end, signal width information Iw1 to Iwj stored in memory 102 may be stored in correspondence with the driving electrode groups G1 to Gi.

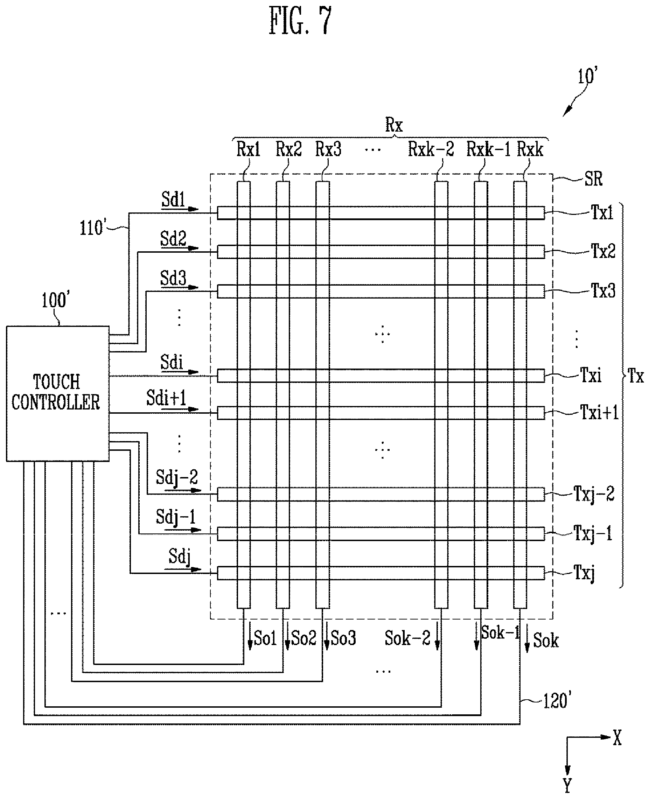

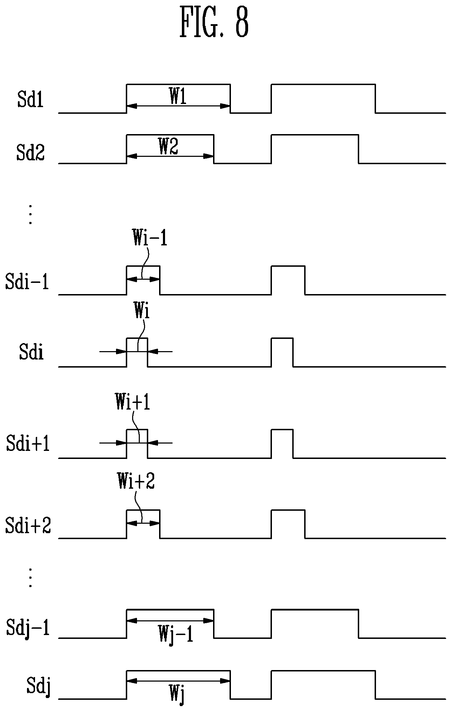

FIG. 7 is a block diagram illustrating a touch sensor, according to one or more exemplary embodiments. FIG. 8 is a diagram illustrating driving signals, according to one or more exemplary embodiments.

Referring to FIG. 7, a touch sensor 10' may include a touch controller 100' that is disposed at a left side or a right side of a touch sensing area SR. That is, the touch controller 100' may be positioned to be spaced apart from distal ends of driving electrodes Tx1 to Txj in a first direction (for example, an X-axis direction). As seen in FIG. 7, the touch controller 100' is positioned at the left side of the touch sensing area SR. Even when configured in this manner, RC delays of driving signals Sd1 to Sdj may be varied according to a difference in length of first connection lines 110'. As such, touch controller 110' may control signal widths W1 to Wj of the driving signals Sd1 to Sdj to be different from each other or in another manner similar to as described in association with FIGS. 1-6.

Referring to FIG. 8, the driving signals Sd1 to Sdj supplied to the first driving electrode Tx1 to the i^{th} driving electrode Txi may have different signal widths W1 to Wi. For example, the i^{th} driving electrode Txi is closest to the touch controller 100', and, as such, the signal width Wi of the i^{th} driving signal Sdi may be the smallest. The first driving electrode Tx1 is furthest from the touch controller 100', and, as such, the signal width W1 of the first driving signal Sd1 may be the largest. As such, the signal widths W1 to Wi of the driving signals Sd1 to Sdi may gradually increase from the i^{th} driving signal Sdi to the first driving signal Sd1.

In a similar fashion, the driving signals Sdi+1 to Sdj supplied to the i+1^{th} driving electrode Txi+1 to the j^{th} driving electrode Txj may have different signal widths Wi+1 to Wj. For example, the i+1^{th} driving electrode Txi+1 is closest to the touch controller 100', and, as such, the signal width Wi+1 of the i+1^{th} driving signal Sdi+1 may be the smallest. The j^{th} driving electrode Txj is farthest from the touch controller 100', and, as such, the signal width Wj of the j^{th} driving signal Sdj may be the largest. As such, the signal widths Wi+1 to Wj of the driving signals Sdi+1 to Sdj may gradually increase from the i+1^{th} driving signal Sdi+1 to the j^{th} driving signal Sdj. It is also noted that the width Wi of the i^{th} driving signal Sdi and the width Wi+1 of the i+1^{th} driving signal Sdi+1 may be the same or different from each other.

According to one or more exemplary embodiments, some driving electrodes Tx1 to Txi may receive the driving signals Sd1 to Sdi having the widths W1 to Wi increasing in a determined direction (for example, toward an upper side, e.g., in a negative second direction), and the remaining driving electrodes Txi+1 to Txj may receive the driving signals Sdi+1 to Sdj having the widths Wi+1 to Wj increasing in another direction (for example, toward a lower side, e.g., in a positive second direction) opposite to the determined direction.

According to one or more exemplary embodiments, the signal widths W1 to Wi of the first driving signal Sd1 to the i+1^{th} driving signal Sdi+1 may be divided into one or more first groups and the signal widths Wi+1 to Wj of the i+1^{th} driving signal Sd1+1^{th} to the j^{th} driving signal Sdj may be divided into one or more second groups in a similar manner to as described in association with FIG. 6. It is also contemplated that that the signal widths W1 to Wj of the first driving signal Sd1 to the j^{th} driving signal Sdj may be divided into one or more groups in a similar manner to as described in association with FIG. 6.

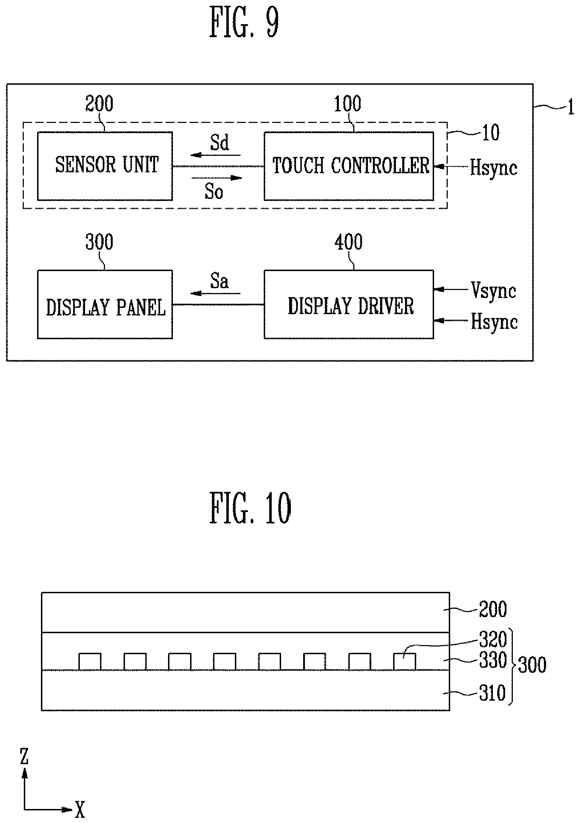

FIG. 9 is a block diagram illustrating a display device, according to one or more exemplary embodiments.

Referring to FIG. 9, a display device 1 may include a touch sensor 10, a display panel 300, and a display driver 400. Although specific reference will be made to this particular implementation, it is also contemplated that display device 1 may embody many forms and include multiple and/or alternative components.

The touch sensor 10 may include a touch controller 100 and a sensor unit 200. The sensor unit 200 may include driving electrodes Tx and sensing electrodes Rx. In this manner, the driving electrodes Tx may receive driving signals Sd from a touch controller 100, and the sensing electrodes Rx may provide output signals So to the touch controller 100. The touch controller 100 may supply the driving signals Sd to the sensor unit 200, and detect a touch input to the display device 1 using the output signals So output from the sensor unit 200.

The touch controller 100 has been previously described, and, therefore, a duplicative description will be omitted to avoid obscuring exemplary embodiments. It is noted, however, that The touch controller 100 may include an electrode driver 101, a memory 102, and a position detecting unit 103, as illustrated and described in association with FIG. 2.

The display panel 300 is a device for providing a user with an image, and may display a determined image through a plurality of pixels. The display driver 400 may generate control signals Sa in response to a synchronization signal (for example, a vertical synchronization signal Vsync and a horizontal synchronization signal Hsync) input from a source (e.g., external source), and supply the generated control signals Sa to the display panel 300 to control an image display operation of the display panel 300. For example, the control signals Sa may include scan signals and data signals.

The vertical synchronization signal Vsync is a signal defining a one frame period. In this manner, a one cycle of the vertical synchronization signal Vsync may be set with a one frame period. Further, the horizontal synchronization signal Hsync is a signal defining a one horizontal period for writing data in pixels (e.g., pixels 320 of FIG. 10) of one line of pixels in a pixel array of the display panel 300. Accordingly, a one cycle of the horizontal synchronization signal is set with a one horizontal period, and when a one frame period is divided by the number of pixel lines of the display panel 300, a one horizontal period may be calculated (or otherwise determined). Driving lines (for example, scan lines and data lines) included in the display panel 300 and the sensor unit 200 of the touch sensor 10 may influence each other due to a coupling phenomenon. As such, when the display panel 300 is driven by the display driver 400, noise may be generated in the touch sensor 10.

To minimize or at least reduce an influence of the noise, the touch controller 100 may, according to one or more exemplary embodiments, control an operation of the sensor unit 200 through synchronization to the horizontal synchronization signal Hsync. For example, the touch controller 100 may control a timing of the supply of the driving signals Sd so as not to overlap the horizontal synchronization signal Hsync.

FIG. 10 is a cross-sectional diagram illustrating a sensor unit and a display panel, according to one or more exemplary embodiments.

Referring to FIG. 10, the sensor unit 200 may be positioned at one side of the display panel 300, e.g., an upper side of the display panel 300. In this manner, a touch input toward the display panel 300 may be detected by disposing the sensor unit 200 on the display panel 300. The display panel 300 may include a substrate 310, pixels 320, and an encapsulation layer 330. In this manner, a plurality of pixels 320 may be positioned on the substrate 310, and the encapsulation layer 330 may be positioned on the pixels 320 and the substrate 310.

For example, the substrate 310 may be formed of an insulating material, such as glass, resin, etc. Further, the substrate 310 may be formed of a material having flexibility so as to be bendable or foldable (or otherwise flexible), and may have a single-layer structure or a multi-layer structure. For instance, the substrate 310 may include at least one of polystyrene, polyvinyl alcohol, polymethyl methacrylate, polyethersulfone, polyacrylate, polyetherimide, polyethylene naphthalate, polyethylene terephthalate, polyphenylene sulfide, polyarylate, polyimide, polycarbonate, triacetate cellulose, and cellulose acetate propionate. It is contemplated, however, that the material of the substrate 310 may be variously changed, and may be formed of, for instance, fiber glass reinforced plastic (FRP), and the like.

The pixels 320 may emit light under the control of the display driver 400, and may be protected by the encapsulation layer 330. For example, the encapsulation layer 330 may prevent moisture, oxygen, and the like from permeating into the pixels 320. In this manner, the encapsulation layer 330 may include at least one of glass, an organic material, and an inorganic material, and may have a single layer structure or a multi-layer structure. For instance, the encapsulation layer 330 may have a multi-layer structure including one or more organic layers and one or more inorganic layers. The one or more organic layers and the one or more inorganic layers may be disposed in an alternating stack of organic layers and inorganic layers. Any other suitable struck may be utilized in association with exemplary embodiments.

A material of the organic material may be a fluoride-based carbon compound, such as polyacryl, polyimide, and Teflon, and an organic insulating material, such as poly epoxy and benzocyclobutene. A material of the inorganic material may include polysiloxane, silicon nitride, silicon oxide, and an inorganic insulating material including aluminum oxide.

As seen in FIG. 10, the sensor unit 200 may be positioned on the encapsulation layer 330 of the display panel 300. For example, the sensor unit 200 may be formed on a separate substrate (not illustrated) positioned on the encapsulation layer 330, or may be directly formed on the encapsulation layer 330.

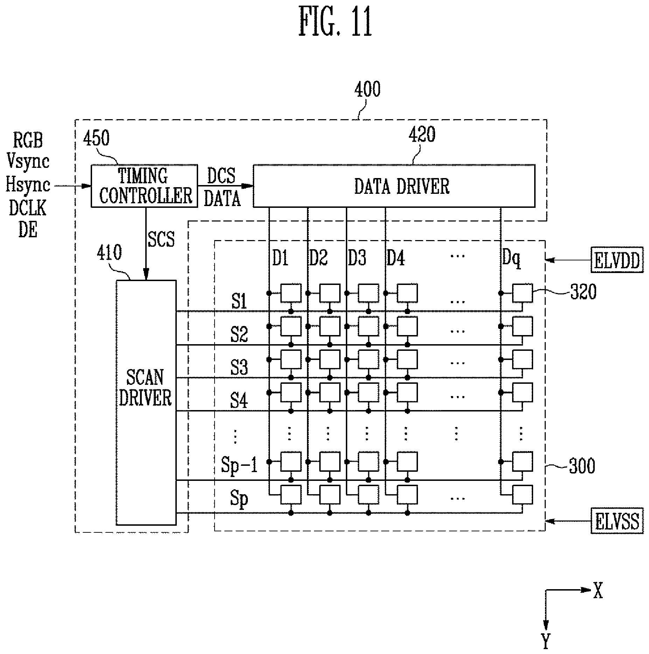

FIG. 11 is a block diagram illustrating a display driver and pixels of a display panel, according to one or more exemplary embodiments. For convenience, FIG. 11 merely illustrates the pixels 320 of the display panel 300, but other constituent elements (for example, the substrate 310 and the encapsulation layer 330) of the display panel 300 are omitted to avoid obscuring exemplary embodiments.

Referring to FIG. 11, the pixels 320 may be connected with data lines D1 to Dq ("q" being an integer greater than zero) and scan lines S1 to Sp ("p" being an integer greater than zero). For example, the pixels 320 may be disposed in a matrix formation in crossing areas of the data lines D1 to Dq and the scan lines S1 to Sp. Each of the pixels 320 may receive a data signal and a scan signal through the data lines D1 to Dq and the scan lines S1 to Sp. Further, the pixels 320 may be connected with a first power source ELVDD and a second power source ELVSS. The pixels 320 may include light emitting devices (for example, organic light emitting diodes), and may generate light corresponding to a data signal by a current flowing from the first power source ELVDD to the second power source ELVSS via the light emitting devices.

The display driver 400 may include a scan driver 410, a data driver 420, and a timing controller 450. The scan driver 410 may supply scan signals to the scan lines S1 to Sp in response to a scan driver control signal SCS from the timing controller 450. For example, the scan driver 410 may sequentially supply the scan signals to the scan lines S1 to Sp. For the connection with the scan lines S1 to Sp, the scan driver 410 may be directly mounted on the substrate 310 on which the pixels 320 are formed, or the scan driver 410 may be connected with the substrate 310 through a separate constituent element, such as a flexible circuit board. The data driver 420 may receive a data driver control signal DCS and image data DATA from the timing controller 450, and generate a data signal. The data driver 420 may supply the generated data signal to the data lines D1 to Dq. For the connection with the data lines D₁ to Dq, the data driver 420 may be directly mounted on the substrate 310 on which the pixels 320 are formed, or the data driver 420 may be connected with the substrate 310 through a separate constituent element, such as a flexible circuit board. Accordingly, when a scan signal is supplied to a specific scan line, a part of the pixels 320 connected with the specific scan line may receive the data signals transmitted from the data lines D1 to Dq. The part of the pixels 320 may emit light with brightness corresponding to the received data signals.

According to one or more exemplary embodiments, the timing controller 450 may generate control signals for controlling the scan driver 410 and the data driver 420. For example, the control signals may include a scan driver control signal SCS for controlling the scan driver 410 and a data driver control signal DCS for controlling the data driver 420. In this manner, the timing controller 450 may generate a scan driver control signal SCS and a data driver control signal DCS using an input signal, which may be received from an external source. For example, the external input signal may include a dot clock DCLK, a data enable signal DE, a vertical synchronization signal Vsync, and a horizontal synchronization signal Hsync. Further, the timing controller 450 may supply a scan driver control signal SCS to the scan driver 410, and a data driver control signal DCS to the data driver 420. The timing controller 450 may convert image data RGB input from the source into image data DATA satisfying a specification of the data driver 420, and supply the image data DATA to the data driver 420. The data enable signal DE is a signal defining a period, for which valid data is input, and a one period may be set with a one horizontal period, like the horizontal synchronization signal Hsync.

Although FIG. 11 separately illustrates the scan driver 410, the data driver 420, and the timing controller 450 as separate elements, it is also contemplated that one or more of the scan driver 410, the data driver 420, and the timing controller 450 may be combined as multifunctional constituent element. Further, the scan driver 410, the data driver 420, and the timing controller 450 may be installed (or otherwise formed) by various methods, such as chip-on-glass, chip-on-plastic, tape carrier package, and chip-on-film methods.

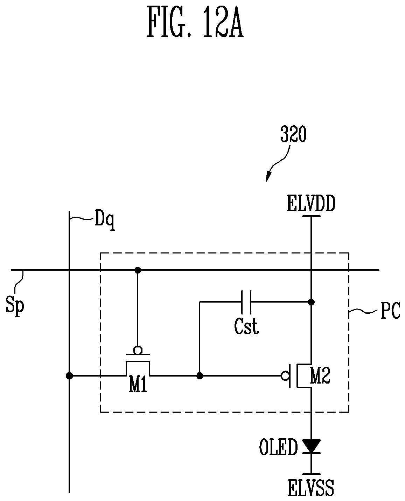

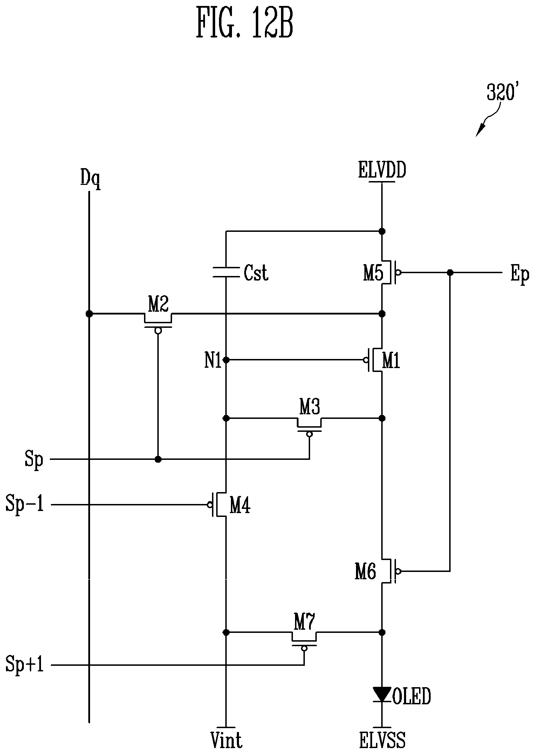

FIGS. 12A and 12B are diagrams of illustrative pixels of FIG. 11, according to various exemplary embodiments. That is, FIGS. 12A and 12B illustrate pixels 320 and 320' connected with a p^{th} scan line Sp and a q^{th} data line Dq.

First, referring to FIG. 12A, the pixel 320 includes an organic light emitting diode OLED, and a pixel circuit PC connected to the q^{th} data line Dq and the p^{th} scan line Sp. In this manner, the pixel circuit PC may be utilized to control the organic light emitting diode OLED.

An anode electrode of the organic light emitting diode OLED may be connected to the pixel circuit PC, and a cathode electrode of the organic light emitting diode OLED may be connected to a second power source ELVSS. The organic light emitting diode OLED may generate light with determined brightness in response to a current supplied from the pixel circuit PC. The pixel circuit PC may store a data signal supplied to the q^{th} data line Dq when a scan signal is supplied to the p^{th} scan line Sp. To this end, the pixel circuit PC may control the quantity of current supplied to the organic light emitting diode OLED in response to the stored data signal.

According to one or more exemplary embodiments, the pixel circuit PC may include a first transistor M1, a second transistor M2, and a storage capacitor Cst. The first transistor M1 may be connected between the q^{th} data line Dq and the second transistor M2. For example, the first transistor M1 may include a gate electrode connected to the p^{th} scan line Sp, a first electrode connected to the q^{th} data line Dq, and a second electrode connected to a gate electrode of the second transistor M2. As such, the first transistor M1 may be turned on when a scan signal is supplied to the p^{th} scan line Sp and the data signal supplied from the q^{th} data line Dq may be supplied to the storage capacitor Cst. In this manner, the storage capacitor Cst may charge a voltage corresponding to the data signal.

The second transistor M2 may be connected between the first pixel power source ELVDD and the organic light emitting diode OLED. For example, the second transistor M2 may include a gate electrode connected to a first electrode of the storage capacitor Cst and the second electrode of the first transistor M1, a first electrode connected to a second electrode of the storage capacitor Cst and the first power source ELVDD, and a second electrode connected to the anode electrode of the organic light emitting diode OLED. In this manner, the second transistor T2 may serve as a driving transistor and may control the quantity of current flow from the first power source ELVDD to the second power source ELVSS via the organic light emitting diode OLED in response to a voltage value stored in the storage capacitor Cst. To this end, the organic light emitting diode OLED may generate light corresponding to the quantity of current supplied from the second transistor M2.

According to one or more exemplary embodiments, the first electrodes of the first and second transistors M1 and M2 may be set to any one of a source electrode and a drain electrode, and the second electrodes of the first and second transistors M1 and M2 may be set to the other electrode of the source electrode and the drain electrode. For example, when the first electrode is set to a source electrode, the second electrode may be set to a drain electrode. It is also noted that although FIG. 12A illustrates the first and second transistors M1 and M2 being PMOS transistors, it is also contemplated that at least one of the first and second transistors M1 and M2 may be NMOS transistors.

Adverting to FIG. 12B, a pixel 320' may include an organic light emitting diode OLED, a first transistor M1 to a seventh transistor M7, and a storage capacitor Cst.

The anode electrode of the organic light emitting diode OLED may be connected to the first transistor M1 via the sixth transistor M6, and the cathode electrode of the organic light emitting diode OLED may be connected to the second power source ELVSS. The organic light emitting diode OLED may generate light with determined brightness in response to the quantity of current supplied from the first transistor M1. To this end, the first power source ELVDD may be set with a higher voltage than that of the second power source ELVSS so that a current may flow to the organic light emitting diode OLED.

The seventh transistor M7 may be connected between an initialization power source Vint and the anode electrode of the organic light emitting diode OLED. Further, a gate electrode of the seventh transistor M7 may be connected to a p+1^{th} scan line Sp+1. The seventh transistor M7 may be turned on when a scan signal is supplied to the p+1^{th} scan line Sp+1 to supply a voltage of the initialization power source Vint to the anode electrode of the organic light emitting diode OLED. Here, the initialization power source Vint may be set with a lower voltage than that of the data signal.

The sixth transistor M6 may be connected between the first transistor M1 and the organic light emitting diode OLED. Further, a gate electrode of the sixth transistor M6 may be connected to a p^{th} emission control line Ep. The sixth transistor M6 may be turned off when an emission control signal is supplied to the p^{th} emission control line Ep, and may be turned on in other instances. The fifth transistor M5 may be connected between the first pixel power source ELVDD and the first transistor M1. Further, a gate electrode of the fifth transistor M5 may be connected to the p^{th} emission control line Ep. The fifth transistor M5 may be turned off when an emission control signal is supplied to the p^{th} emission control line Ep, and may be turned on in other instances.

A first electrode of the first transistor M1 (the driving transistor) may be connected to the first power source ELVDD via the fifth transistor M5, and a second electrode of the first transistor M1 may be connected to the anode electrode of the organic light emitting diode OLED via the sixth transistor M6. Further, a gate electrode of the first transistor M1 may be connected to a first node N1. The first transistor M1 may control the quantity of current flowing from the first power source ELVDD to the second power source ELVSS via the organic light emitting diode OLED in response to a voltage of the first node N1.

The third transistor T3 may be connected between the second electrode of the first transistor M1 and the first node N1. Further, a gate electrode of the third transistor M3 may be connected to the p^{th} scan line Sp. The third transistor M3 may be turned on when a scan signal is supplied to the p^{th} scan line Sp to electrically connect the second electrode of the first transistor M1 and the first node N1. When the third transistor M3 is turned on, the first transistor M1 may be connected in the form of a diode.

The fourth transistor M4 may be connected between the first node N1 and the initialization power source Vint. Further, a gate electrode of the fourth transistor M4 may be connected to the p-1^{th} scan line Sp-1. The fourth transistor M4 may be turned on when a scan signal is supplied to the p-1^{th} scan line Sp-1 to supply the voltage of the initialization power source Vint to the first node N1. The second transistor M2 may be connected between the q^{th} data line Dq and the first electrode of the first transistor M1. Further, a gate electrode of the second transistor M2 may be connected to the p^{th} scan line Sp. The second transistor M2 may be turned on when a scan signal is supplied to the p^{th} scan line Sp to electrically connect the q^{th} data line Dq and the first electrode of the first transistor M1. It is also noted that the storage capacitor Cst may be connected between the first power source ELVDD and the first node N1. The storage capacitor Cst may store a data signal and a voltage corresponding to a threshold voltage of the first transistor M1.

According to one or more exemplary embodiments, the first electrodes of the first to seventh transistors M1, M2, M3, M4, M5, M6, and M7 may be set to any one of a source electrode and a drain electrode, and the second electrodes of the first to seventh transistors M1, M2, M3, M4, M5, M6, and M7 may be set to the other electrode of the source electrode and the drain first electrode. For example, when the first electrode is set to a source electrode, the second electrode may be set to a drain electrode. Although FIG. 12B illustrates the first to seventh transistors M1, M2, M3, M4, M5, M6, and M7 being PMOS transistors, it is contemplated that at least one of the first to seventh transistors M1, M2, M3, M4, M5, M6, and M7 may be implemented as NMOS transistors.

It is noted that the pixel structures of FIGS. 12A and 12B are simply illustrative of exemplary embodiments, and, as such, pixels 320 and 320' are not limited to the pixel structures of FIGS. 12A and 12B. In this manner, the pixels 320 and 320' may have any suitable circuit structure capable of supplying a current to the organic light emitting diode OLED. Also, the first power source ELVDD may be a relatively high potential power source, and the second power source ELVSS may be a relatively low potential power source. For example, the first power source ELVDD may be set with a positive voltage, and the second power source ELVSS may be set with a negative voltage or a ground voltage.

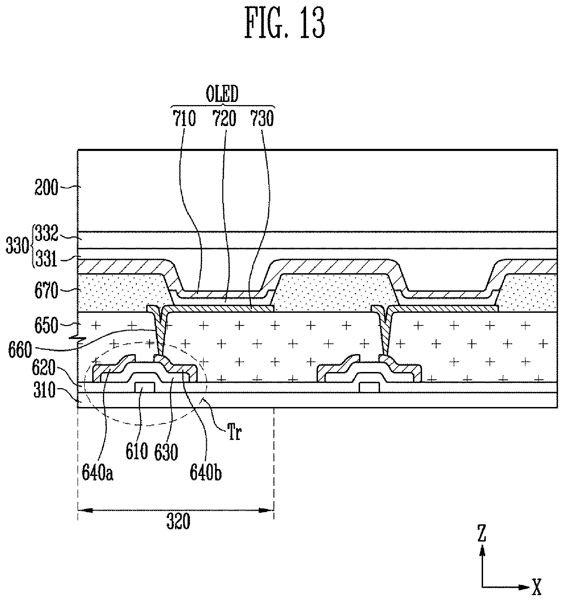

FIG. 13 is a cross-sectional view illustrating a portion of a display panel, according to one or more exemplary embodiments.

Referring to FIG. 13, an organic light emitting diode OLED may include an anode electrode 730, an emission layer 720, and a cathode electrode 710. The emission layer may be positioned between the anode electrode 730 and the cathode electrode 710. For example, the emission layer 720 may include an organic emission layer for self-emitting light. Although not illustrated, the emission layer 720 may be formed in a structure including a hole transporting layer, an organic emission layer, and an electron transporting layer laminated (or otherwise formed) on one another. It is also noted that the emission layer 720 may additionally include a hole injection layer (not shown) and an electron injection layer (not illustrated). Utilizing the aforementioned structure, holes injected from the anode electrode 730 and electrons injected from the cathode electrode 710 may be combined in the organic emission layer to generate excitons, and light of a specific wavelength may be generated in each emission layer 720 by energy from the generated excitons.

According to one or more exemplary embodiments, the cathode electrode 710 may be connected with the second power source ELVSS of FIGS. 12A and 12B. The cathode electrode 710 may include a conductive material. For example, the conductive material may be a metal, an alloy, a conductive polymer, a transparent conductive material, and the like. For instance, the cathode electrode 710 may include a material selected from one or more of the above-noted materials utilized to form the driving electrodes Tx and the sensing electrodes Rx.

A plurality of pixels 320 may be positioned on a substrate 310. In this manner, the pixel 320 may be formed of a pixel circuit (not illustrated) including a driving transistor Tr and the organic light emitting diode OLED. For descriptive and illustrative convenience, FIG. 13 only illustrates the driving transistor Tr directly related to the organic light emitting diode OLED, but the pixel circuit (not illustrated) may additionally include other transistors other than the driving transistor Tr, and capacitors in order to control the emission of the organic light emitting diode OLED. For instance, the pixel circuit may correspond to one of the aforementioned pixel circuits described in association with FIGS. 12A and 12B.

As seen in FIG. 13, driving transistors Tr may be formed on the substrate 310, and may be positioned to correspond to each organic light emitting diode OLED. The driving transistor Tr may include a gate electrode 610, a gate insulating layer 620, a semiconductor layer 630, and source/drain electrodes 640a and 640b. The gate electrode 610 may be formed on the substrate 310; however, it is contemplated that one another buffer layers may be formed between the gate electrode 610 and the substrate 310. The gate insulation layer 620 may be formed on the gate electrode 610. For example, the gate insulation layer 620 may be formed of an insulating material, such as an inorganic insulating material, e.g., silicon oxide (SiOx), silicon nitride (SiNx), etc.

The semiconductor layer 630 may be formed on the gate insulating layer 620. For example, amorphous silicon may be formed into crystalized polysilicon using laser irradiation, however, it is contemplated that any suitable semiconductor material may be utilized in association with exemplary embodiments. For instance, the semiconductor layer 630 may be formed of amorphous silicon, an oxide semiconductor, etc. The source/drain electrodes 640a and 640b may be positioned respective sides of the semiconductor layer 630.

A passivation layer 650 may be positioned on the driving transistor Tr, and may include a contact hole 660 exposing the source electrode 640a or the drain electrode 640b. FIG. 13 illustrates the drain electrode 640b exposed by the contact hole 660. The gate electrode 610 and the source/drain electrodes 640a and 640b may be formed of a metal, such as molybdenum, tungsten, titanium, aluminum, etc., an alloy thereof, or a laminated structure thereof. It is noted, however, that exemplary embodiments are not limited thereto or thereby. The anode electrode 730 may be formed on the passivation layer 650, and the anode electrode 730 may be connected with the source electrode 640a or the drain electrode 640b through the contact hole 660. Again, FIG. 13 illustrates the anode electrode 730 being connected to the drain electrode 640b through the contact hole 660. The passivation layer 650 may be formed of an insulating material, such as an inorganic insulating material, e.g., silicon oxide, silicon nitride, etc.

A pixel defining layer 670 may be positioned on the passivation layer 650. To this end, the pixel defining layer 670 may expose at least a portion of the anode electrode 730. For example, the pixel defining layer 670 may be formed of one of an acrylic organic compound and an organic insulating material, such as polyamide and polyimide, but exemplary embodiments are not limited thereto or thereby. For instance, the pixel defining layer 670 may be formed of any suitable insulating material.

An encapsulation layer 330 may be positioned on the organic light emitting diode OLED. That is, the encapsulation layer 330 may be positioned on the cathode electrode 710. It is noted that the encapsulation layer 330 may be formed of a laminated structure. For example, the encapsulation layer 330 may include at least one organic layer 331 and at least one inorganic layer 332. FIG. 13 illustrates the encapsulation layer 330 including one organic layer 331 and one inorganic layer 332, but the encapsulation layer 330 may include a plurality of organic layers 331 and a plurality of inorganic layers 332. In this manner, the organic layers 331 and the inorganic layers 332 may be alternately laminated (or stacked) on one another. For example, the organic layer 331 may have a thickness of greater than 0 µm and less than or equal to 8 µm, and in order to increase flexibility of the display panel 300, the organic layer 331 may have a thickness of greater than 0 µm and less than or equal to 4 µm. Further, the inorganic layer 332 may have a smaller thickness than that of the organic layer 331. Further, a sensor unit (or portion) 200 of a touch sensor 10 may be positioned on the encapsulation layer 330.

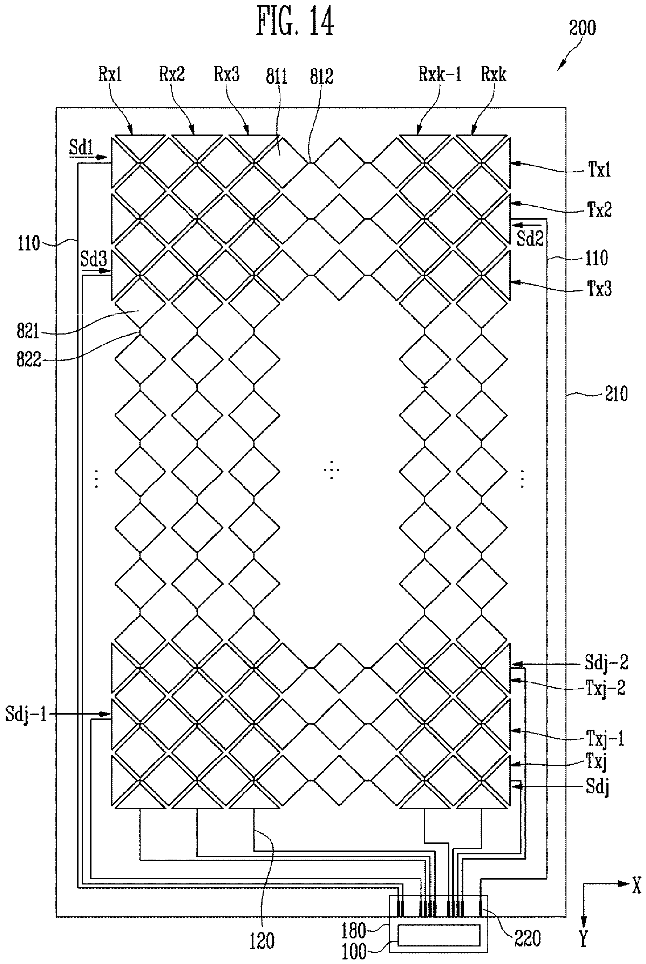

FIG. 14 is a diagram illustrating a sensor unit, according to one or more exemplary embodiments.

Referring to FIG. 14, the sensor unit 200 may include a plurality of driving electrodes Tx1 to Txj and a plurality of sensing electrodes Rx1 to Rxk. The driving electrodes Tx1 to Txj and the sensing electrodes Rx1 to Rxk were previously described in association with FIGS. 1 to 8, and, thus, duplicative descriptions will be omitted to avoid obscuring exemplary embodiments. As such, primarily differences and additional details will be provided below.

The plurality of driving electrodes Tx1 to Txj may be elongated in a first direction (for example, an X-axis direction) and arranged in a second direction (for example, a Y-axis direction) crossing the first direction. The plurality of sensing electrodes Rx1 to Rxk may be elongated in the second direction (for example, the Y-axis direction) and arranged in the first direction (for example, the X-axis direction). In this manner, the driving electrodes Tx1 to Txj and the sensing electrodes Rx1 to Rxk may be positioned on a sensor substrate 210.

For example, each of the driving electrodes Tx1 to Txj may include a plurality of first sensing cells 811 arranged in the first direction (for example, the X-axis direction) with a determined interval, and a plurality of first connection patterns 812 electrically connecting the first sensing cells 811. Further, each of the sensing electrodes Rx1 to Rxk may include a plurality of second sensing cells 821 arranged in the second direction (for example, the Y-axis direction) with a determined interval, and a plurality of second connection patterns 822 electrically connecting the second sensing cells 821. In this manner, the second sensing cells 821 may be distributed between the first sensing cells 811 so as not to overlap the first sensing cells 811. Although FIG. 11 illustrates the first sensing cells 811 and the second sensing cells 821 having polygonal shapes, exemplary embodiments are not limited thereto or thereby. In this manner, the shapes of the first sensing cells 811 and the second sensing cells 821 may be variously changed.

According to one or more exemplary embodiments, the first sensing cells 811 and the second sensing cells 821 may be positioned on (or at) the same layer. To prevent the first connection patterns 812 and the second connection patterns 822 from contacting each other, insulating layers (not illustrated) may be positioned in crossing portions of the first connection patterns 812 and the second connection patterns 822. It is noted, however, that the first sensing cells 811 and the second sensing cells 821 may be positioned on different layers.

The sensor substrate 210 may be formed of an insulating material, such as glass, resin, etc. Further, the sensor substrate 210 may be formed of a material having flexibility so as to be bendable or foldable, and may have a single-layer structure or a multi-layer structure. For example, the sensor substrate 210 may include at least one of polystyrene, polyvinyl alcohol, polymethyl methacrylate, polyethersulfone, polyacrylate, polyetherimide, polyethylene naphthalate, polyethylene terephthalate, polyphenylene sulfide, polyarylate, polyimide, polycarbonate, triacetate cellulose, and cellulose acetate propionate. It is contemplated, however, that the material of the sensor substrate 210 may be variously changed, and may be formed of, for instance, fiber glass reinforced plastic (FRP), and the like. Further, the sensor substrate 210 may be implemented with a separate substrate, or may be implemented with various elements included in the display device. For example, the sensor substrate 210 may be the encapsulation layer 330 included in the display panel 300.

As seen in FIG. 14, a plurality of pads 220 may be positioned at one side of the sensor substrate 210. First connection lines 110 may be connected between the driving electrodes Tx1 to Txj and the pads 220, and second connection lines 120 may be connected between the sensing electrodes Rx1 to Rxk and the pads 220. The touch controller 100 may be connected with the pads 220 through a separate element, such as a flexible printed circuit board (FPCB) 180. Accordingly, the touch controller 100 may be electrically connected with the driving electrodes Tx1 to Txj and the sensing electrodes Rx1 to Rxk through the first and second connection lines 110 and 120. To this end, the touch controller 100 may supply driving signals Sd1 to Sdj to the driving electrodes Tx1 to Txj through the first connection lines 110, and may receive output signals So1 to Sok (not shown) from the sensing electrodes Rx1 to Rxk through the second connection lines 120.

Although FIG. 14 illustrates the first connection lines 110 formed at the left and right sides alternately connected to the driving electrodes Tx1 to Txj, it is contemplated that the first connection lines 110 may be positioned at one side of the driving electrodes Tx1 to Txj and connected to one end of the driving electrodes Tx1 to Txj, respectively. Further, the first connection lines 110 may be positioned at both sides of the driving electrodes Tx1 to Txj and connected to both ends of the driving electrodes Tx1 to Txj. Further, the touch controller 100 may be mounted (or otherwise coupled or formed) via various methods, such as chip-on-glass, chip-on-plastic, tape carrier package, chip-on-film, etc.

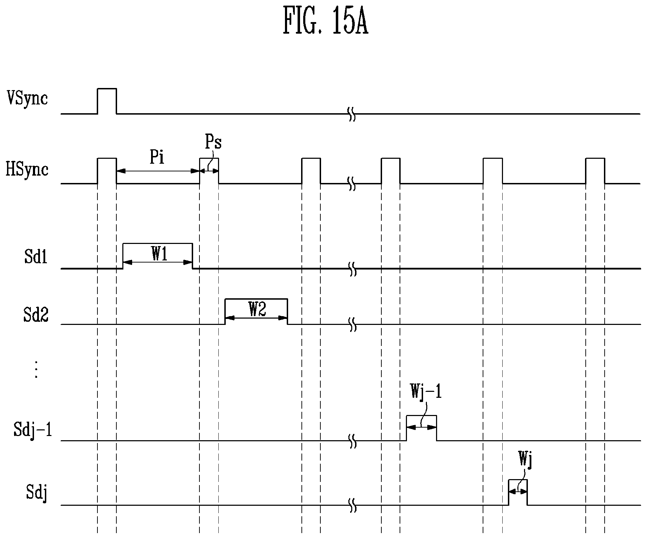

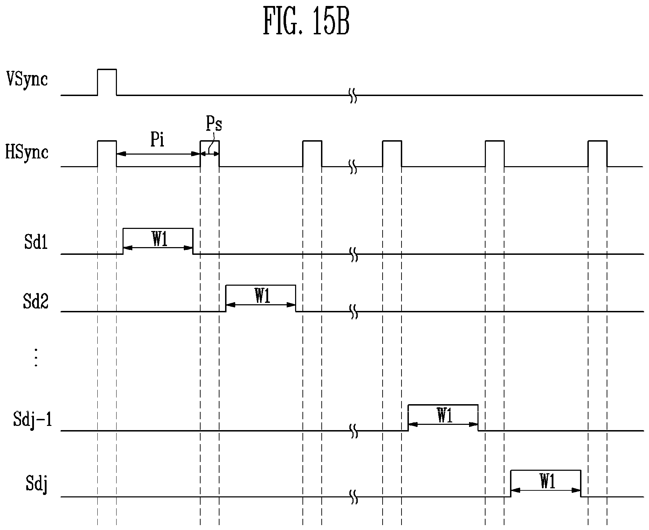

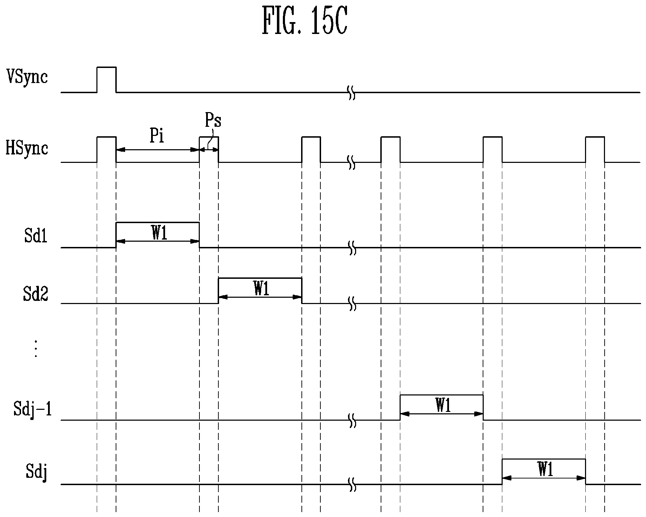

FIGS. 15A, 15B, and 15C are diagrams illustrating various driving signals, according to various exemplary embodiments.

As illustrated in FIG. 14, the touch controller 100 may be disposed at one side (for example, a lower side) of the sensor unit 200. That is, the touch controller 100 may be positioned and spaced apart from distal ends of the sensing electrodes Rx1 to Rxk in the second direction (for example, the Y-axis direction). In this manner, the electrode driver 101 (not shown) of the touch controller 100 may control the widths W1 to Wj of the driving signals Sd1 to Sdj to compensate for a difference in RC delay corresponding to the positions of the various driving electrodes Tx1 to Txj. Further, the electrode driver 101 may supply the driving signals Sd1 to Sdj so as not to overlap the vertical synchronization signal Vsync and the horizontal synchronization signal Hsync. Such a driving scheme may minimize (or at least reduce) the generation of noise.
For example, the horizontal synchronization signal Hsync may be supplied in a first period Ps, and the supply of the horizontal synchronization signal Hsync may be stopped in a second period Pi. In this manner, the horizontal synchronization signal Hsync may be periodically suppled, such that the second period Pi may exist between adjacent first periods Ps. In this manner, the electrode driver 101 may supply the driving signals Sd1 to Sdj in accordance with the second period Pi, during which the horizontal synchronization signal Hsync is not supplied. Further, as described in association with, for instance, FIG. 4, the electrode driver 101 may supply the driving signals Sd1 to Sdj to the driving electrodes Tx1 to Txj with the driving signals Sd1 to Sdj having different widths W1 to Wj according to the positions of the driving electrodes Tx1 to Txj.

For example, as illustrated in FIG. 15A, the electrode driver 101 may gradually increase the widths W1 to Wj of the driving signals Sd1 to Sdj from the j^{th} driving signal Sdj to the first driving signal Sd1. Further, as illustrated in FIG. 15B, the electrode driver 101 may set the largest signal width W1 that may allow all of the widths of the driving signals Sd1 to Sdj to be the same. That is, the electrode driver 101 may set the largest signal width W1 of the signal width information Iw stored in the memory 102 (see also FIGS. 3 and 5). It is also contemplated that, with reference to FIG. 15C, the first width W1 of the driving signals Sd1 to Sdj may be the same as the second period Pi during which the supply of the horizontal synchronization signal Hsync is stopped. It is noted that in FIG. 15B, the first width W1 is less than the second period Pi. It is also contemplated that the driving electrodes Tx1 to Txj may be divided in to a plurality of driving electrode groups G1 to Gi as illustrated in FIG. 6. In this manner, the electrode driver 101 may supply the driving signals Sd1 to Sdj having the different widths W1 to Wj according to the positions of the driving electrode groups G1 to Gi to the driving electrodes Tx1 to Txj. As such, driving electrodes included in the same driving electrode group may receive a driving signal having the same width as other driving electrodes of the same driving electrode group.

It is also contemplated that, as illustrated in FIG. 7, the touch controller 100 may be disposed at a left side or a right side of the sensor unit 200. That is, the touch controller 100 may be positioned and spaced apart from distal ends of the driving electrodes Tx1 to Txj in the first direction (for example, the X-axis direction). In this manner, the electrode driver 101 may control the widths W1 to Wj of the driving signals Sd1 to Sdj as previously illustrated and described in association with FIG. 8.

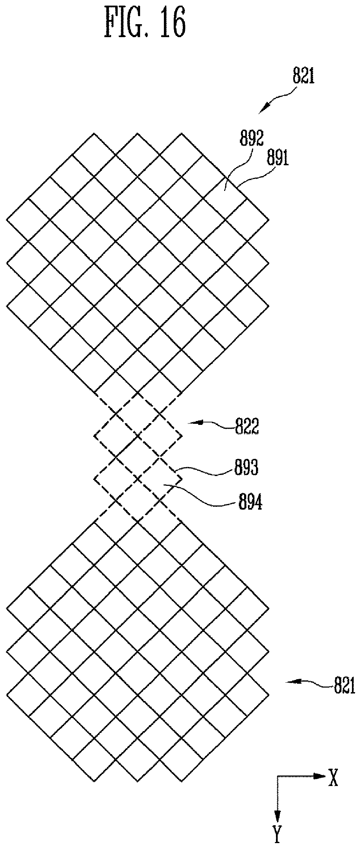

FIG. 16 is a diagram illustrating detecting cells, according to one or more exemplary embodiments. That is, FIG. 16 illustrates second sensing cells 821 and a second connection pattern 822 included in the first sensing electrode Rx1. For illustrative convenience, the second sensing cells 821 are shown with a solid line, and the second connection pattern 822 is depicted with a dotted line.

As previously described, the second sensing cells 821 may be arranged in a determined direction, and the second connection pattern 822 may connect adjacent second sensing cells 821 to each other. Each of the second sensing cells 821 may have a mesh shape including a plurality of openings 892. To this end, the second sensing cells 821 may be formed of thin metal lines 891 forming the plurality of openings 892. The second connection pattern 822 may also have a mesh shape including a plurality of openings 894 like the second sensing cell 821. To this end, the second connection pattern 822 may be formed of thin metal lines 893 forming the plurality of openings 894.

Although the first sensing electrode Rx1 has been mainly described, it is contemplated that other sensing electrodes (e.g., the second to k^{th} sensing electrodes Rx2 to Rxk) may also have the same shape. In a similar manner, the driving electrodes Tx1 to Txj may be formed with a similar mesh shape as that of the first sensing electrode Rx1, but the driving electrodes Tx1 to Txj may extend in a different direction than the sensing electrodes Rx1 to Rxk. As such, the first sensing cells 811 and the first connection patterns 812 included in the driving electrodes Tx1 to Txj may have mesh shapes.

Although certain exemplary embodiments and implementations have been described herein, other embodiments and modifications will be apparent from this description. Accordingly, the inventive concept is not limited to such embodiments, but rather to the broader scope of the presented claims.

## Claims

1. A touch sensor, comprising:
driving electrodes;
sensing electrodes insulated from the driving electrodes;
a memory comprising signal width information; and
a driver configured to:
determine signal widths to generate driving signals based on the signal width information; and
supply the driving signals to the driving electrodes.

2. The touch sensor of claim 1, wherein:
the signal width information comprises different signal widths; and
the driver is configured to generate the driving signals with a signal width corresponding to any one of the different signal widths.

3. The touch sensor of claim 2, wherein a largest signal width among the different signal widths is utilized to generate the driving signals.

4. The touch sensor of claim 1, wherein:
the driving signals comprise different signal widths; and
the driver is configured to determine the different signal widths according to positions of the driving electrodes with respect to the driver.

5. The touch sensor of claim 4, wherein:
the driving electrodes comprise:
a first driving electrode to receive a first driving signal of the driving signals; and
a second driving electrode to receive a second driving signal of the driving signals, the first driving electrode being farther from the driver than the second driving electrode; and
a signal width of the first driving signal is greater than a signal width of the second driving signal.

6. The touch sensor of claim 4 or 5, wherein the different signal widths increase with increasing distance from the driver, optionally wherein the different signal widths gradually increase with increasing distance from the driver.

7. The touch sensor of any one of the preceding claims, wherein:
the driving electrodes are grouped into driving electrode groups, each driving electrode group comprising at least two driving electrodes; and
the driver is configured to:
determine a different signal width for each driving electrode group of the driving electrode groups; and
supply a same driving signal to each driving electrode of a driving electrode group.

8. The touch sensor of any one of the preceding claims, wherein:
the driving electrodes longitudinally extend in a first direction; and
the driver is spaced apart from distal ends of the driving electrodes in the first direction, or, wherein:
the sensing electrodes longitudinally extend in a first direction; and
the driver is spaced apart from distal ends of the sensing electrodes in the first direction.

9. The touch sensor of any one of the preceding claims, wherein the driving electrodes and the sensing electrodes comprise mesh shapes with openings.

10. A display device, comprising:
a display panel; and
a touch sensor according to any one of the preceding claims on the display panel, wherein the driver comprises a first driver.

11. The display device of claim 10, further comprising:
a second driver configured to: periodically receive a vertical synchronization signal and a horizontal synchronization signal; and
drive the display panel in response to the vertical synchronization signal and the horizontal synchronization signal.

12. The display device of claim 11, wherein the driving signals do not overlap the horizontal synchronization signal.

13. The display device of claim 10, 11 or 12, wherein the display panel comprises:
a substrate;
pixels on the substrate; and
an encapsulation layer on the pixels, wherein the encapsulation layer optionally comprises at least one organic layer and at least one inorganic layer.

14. The display device of claim 13, wherein:
the driving electrodes and the sensing electrodes are on the encapsulation layer; and
the encapsulating layer is between the pixels and the driving electrodes and the sensing electrodes.

15. The display device of any one of claims 10 to 14, wherein:
the second driver is configured to receive the horizontal synchronization signal in first periods spaced apart from one another by second periods; and
widths of the signal widths of the driving signals and the second periods are equivalent.
